# EUROPEAN PATENT SPECIFICATION

(11) **EP 0 432 480 B1**
(45) Date of publication and mention of the grant of the patent: **09.08.1995**
(21) Application number: 90121671.3
(22) Date of filing: 13.11.1990
(51) Int. Cl.: C08J 3/22

(54) **Multi-purpose masterbatches**
Mehrzweckkonzentrate
Mélanges maîtres à usages multiples

(30) Priority: 16.11.1989 IT 2240289
(43) Date of publication of application: 19.06.1991
(73) Proprietor: Moltrasio Giuseppe, I-21047 Saronno (Varese) (IT)
(72) Inventor: Moltrasio Giuseppe, I-21047 Saronno (Varese) (IT)
(74) Representative: Gervasi, Gemma, Dr.

(56) References cited:
- DE-A- 3 722 138
- DE-B- 2 441 603
- FR-A- 2 310 395
- GB-A- 2 135 690
- US-A- 4 839 414

## Description

### Prior art

In the fields of plastic materials, paints, printing inks, in order to obtain colored materials, specific masterbatches or pastes (also called mother mixes) are employed commercially. In said masterbatches are admixed, in high concentration, pigments and dyeing materials and if needed other additivies.

Such pastes are then dispersed in plastic materials, paints, inks of various types, in order to have the desired concentrations of dyeing materials and additives.

The preparation of masterbatches having high content of pigments according to USP 4,839,414 is based on chemical process which involve polycondensation and polymerization reactions and in particular the use of a polyisocianate as a reagent.

German patent 2.441.603 discloses the preparation of masterbatches of pigments containing as resin component a polyoxymethyl melamine/formaldehyde resin characterized by complete solubility in water.

German patent 3.722.138 discloses a film forming treatment of pigments by using substances known as plasticizing agents.

As far as we know, no single masterbatch exists which may be employed for dyeing all the categories of materials mentioned.

It appears very desirable, however, to have a masterbatch which can be employed for many materials, so that a certain pigment, dye or additive once dispersed in such mother mix may serve for dyeing many different materials or as an additive for them.

This problem is felt particularly in the paint field, where a same producer prepares various paints based on different polymeric bases, such as nitrocellulose, alkyd, vinyl, acrylic, epoxy, polyester, polyurethane etc., so that the producer has to prepare, for a certain dye, pigment or additive, as many pastes as necessary for all the different paints on different polymeric basis that he produces.

Furthermore at the paint sale points it is necessary to have a very large assortment of products with different polymer basis and of the most various colors, in order to satisfy the multivarious needs of the final users.

The producer must, therefore, have at his disposal a vaste number of masterbatches for each color nuance and for each polymer basis, so as to prepare the various paints as needed.

This entails a considerable delay in answering the market requests; in order to obviate this, it is necessary to have at the sales points, for each color, a vaste stock of ready colored paints on nitrocellulose, alkyd, vinyl, basis.

This storage entails a large capital outlay and may create serious environment problems, as the paints undergo alterations with time and, if not used, must be discarded.

### Summary of the invention

The present invention refers to multi-purpose masterbatches suitable for dyeing or serving as additives to different materials, such as paints on different polymer bases, plastic materials and inks, consisting essentially of a homogeneous mixture of three components: a) acrylic and/or ketone- and/or aldehyd-resins; b) particular citric-, acetylcitric- or tartaric acid esters; c) dyes and/or pigments and/or additives.

### Detailed description of the Invention

We have now found, and it is an object of the present invention, a multi-purpose masterbatch, which may be employed to disperse dyes, pigments and additives in paints with various polymeric bases, in various plastic materials, in printing inks and serigraphy,
Therefore, a single masterbatch, which contains in dispersion e.g. a specific dye, may be employed to dye paints on different polymeric basis, and furthermore resins such as polyethylene, ABS-, PVC resins, rubbers, inks.

The masterbatches which are the object of the present invention consist of the three essential components:
a) a first component consisting of a resin selected from the group comprising
   a₁) acrylic resins which may be admixed with versatic resins and which have a softening point of between 75 and 115°C
   a₂) ketone- or aldehyde resins, preferably cyclohexanone- or urea-aldehyde resins, having a softening point of between 70 and 115°C
b) a second component selected from the group consisting of:
   b₁) citric-, acetylcitric- or tartaric acid esters of glycols or polyalkylenglycols containing between 10 and 30 monomer
   b₂) citric- or tartaric acids mono-alcohol esters in admixture with polyalkylenglycols containing between 10 and 30 monomeric units, and which may be esterified with fatty acids having between 4 and 18 carbon atoms
c) dyes and/or pigments and additives.

Resin a) should have a melting point sufficiently low to allow extrusion of the a + b mix at a temperature not higher than 150°C. in order not to damage the pigments and additives dispersed in the masterbatch. Furthermore, resin a) should be soluble in the organic solvents employed as paint vehicles.

In place of resin a₁ alone or resin a₂ alone, one may employ mixtures of both in a a₁/a₂ ratio of between 70:30 and 10:90.

The weight ratio between resin a) and component b) should be between 95:5 and 80:20.

The masterbatches according to the invention are prepared in general by dispersion in component b) of the normal additives, such as antiflocculant-, atisediment-, flameproofing-, antistatic agents, while in resin a) the dye and/or pigment is admixed.

The two mixes are then put together, preferably following the following steps:
Resin a), the desired pigment or dye are charged in a turbo-dispersing apparatus, or in a similar apparatus suitable for obtaining a through mixing, and the batch is kept under stirring until an intimate dispersion is obtained. A dispersion of the possible additives in component b) is prepared separately and this dispersion is slowly added to the pigment or dye dispersion in resin a), while the dispersing apparatus is kept turning. In the absence of additives, only component b) is added in the same way. A powder is thus obtained, which is put into a bifilar extruder and extruded at a temperature of between 90 and 150°C. At the exit of the extruder a cutter is provided which cuts the extruded mix in pellets of desired sizes.

The pellets are then stocked as such or ground to obtain granules or powders. The thus obtained masterbatches may be added to materials to be dyed or to which additives have to be added, so that a certain dye, pigment and/or additive may be admixed in any type of finished product. such as paints, resins, inks.

Any type of pigment, dye or additive stable up to 150°C may be comprised in the a) + b) mixture to form the masterbatch. The pigment and/or dye percentage in the masterbatch may vary according to the nature of the substance: with carbon black is preferably not higher than 16%, while in the case of titanium dioxide it can reach 90%.

The masterbatches according to the invention may be admixed with nitrocellulose-, alkyd-, acrylic-, vinyl-, epoxy-, polyurethane-, polyester-, chlorinated-rubber paints, in which they are dispersed by simple stirring, without any need of more complex operation, such as milling, kinetic dispersion, raffination, filtration etc. with evident advantages both in cost and for the environment.

The same masterbatches may be dispersed in vinyl polymers, in polyethylene, in ABS resins, in polyamide resins and in elastomers.

The masterbatches according to the invention considerably simplify the paint sales system. In fact, as a masterbatch may be easily dispersed in the polymeric bases by mere stirring, the preparation of paints of any type or color does not need to be made at the plant, but may be made by the distributor, who only needs a series of masterbatches of different colors and of colorless polymeric bases: by dissolving a certain masterbatch in any polymeric base, the distributor may thus obtain immediately the paints of the color requested by the client.

The following examples are reported to better illustrate the invention without any limitation of same.

### Example 1

In a turbo-dispersing apparatus, 100 g of component a) are charged having the following composition by weight: PARALOID DM-55® (Rohm & Haas Co.) (a solid acrylic resin soluble in organic solvents with a flow point of 70°C) 45%; LAROPAL K 80® (BASF) (a cyclohexanone condensation product, with a softening point of between 75 and 85°C) 55%. 80 g of phthalocyanine blue pigment are then added and the mixture is stirred thoroughly until a uniform dispersion is obtained. In the apparatus kept under stirring, 20 g of component b) having the following composition by weight are added:

| | |
|---|---|
| - tributylcitrate | 70% |
| - PEG 400 ML | 10% |
| - TBCP | 4% |
| - Elfugine V | 3% |
| - triethanolamine | 12% |
| - TO additive | 1% |

PEG 400 ML (COMIEL S.p.A.) is a non- ionic liquid tensioactive product obtained by esterification of a medium-short chain polyethylenglycol.

TBCP is 2-Cl-ethanol phosphate, normally employed as fire proofing agent.

Elfugine V® (Sandoz) is an amphoteric liquid, normally employed as antistatic agent.

TO additive (Bayer) is a silicone liquid normally employed to improve the spreading of paints and to impart efficient anti-scratch properties.

After the addition of component b) the apparatus is kept turning for additional 10 minutes, thus obtaining a powder which is then fed to a bifilar extruder, at the temperature of 120°C. The extruded product is then cut into pellets.

In the obtained masterbatch, phthalocianine blue is thus present in an amount of 40% by weight.

The masterbatch pellets thus obtained were employed to impart a blue color to SIPE NOBEL nitrocellulose paints both of high and low viscosity (type NORMA 37, 32, 27, 24, 9 and 7) obtaining a perfect color ditribution.

The same masterbatch was employed to color printing and offset inks as well as PVC polymers, demostrating the perfect compatibility of a single masterbatch with paints, inks and plastic materials.

### Example 2

In the mixing apparatus of Example 1, and in the same way, 40 g of component a) are charged having the following composition by wt: PARALOID DM-55® 30%; LAROPAL A 81® (BASF) (a urea-aliphatic aldehyde condensation product, with a softening point of 80-90°C), 70%. 150 g of a red iron oxide 130 M pigment are then added and the mixture is stirred until a complete dispersion is obtained. 10 g of component b) are than added slowly, having the same composition as in Example 1. The obtained powder is extruded at 120°C and the extruded product is cut in pellets. These are then micronized to a 20 to 50 micron powder.

The pulverized masterbatch (final product) contains therefore 75% pigment by wt.

The thus obtained masterbatch is employed to color alkyd-, epoxy-, vinyl-, acrylic-, polyurethane-, polyester resins, to a perfect homogeneous color.

It was also employed to color in a perfectly homogeneous way plastic materials consisting essentially of PVC, polyethylene, polypropylene and polyamides.

### Example 3

In the turbo-dispersing apparatus of Example 1, 100 g of component a) are charged, having the following composition: PARALOID DM 55® 15%, mixture in equal parts of LAROPAL K 80® and LAROPAL A 81®, 85%.

80 g phthalocyanine blue pigment are then added and the mixture is stirred until an intimate dispersion is obtained. 20 g of component b) having the same composition as in Example 1 are then added slowly under continued stirring. The obtained powder is then extruded at 120°C and the extruded product is cut into pellets.

The color is thus contained in the masterbatch in an amount of 40% by wt.

The thus obtained masterbatch was employed to color in blue, with perfect color homogeneity, nitrocellulose-, alkyd-, acrylic-, vinyl-epoxy-, polyurethane and polyester resin, also polyethylene, ABS resin and natural rubber.

### Example 4

Employing the apparatus of Example 1 and in the same way, 40 g of component a) are charged, consisting of LAROPAL A 81®. 150 g red, iron oxide 130 M pigment are added and the mixture is stirred to obtain a complete dispersion. In the turbo dispersing apparatus d10 g of component b) are then added slowly, having the following composition by wt.:

| | |
|---|---|
| - acetyltributylcitrate | 45% |
| - PEG 400 ML | 20% |
| - epoxydized soy oil | 15% |
| - dioctylphthalate | 20% |

The obtained powder is extruded at 120°C and the extruded product is cut into pellets. These are then ground, to obtain a powder of between 20 and 50 micron size.

The pigment is thus contained in the masterbatch in an amount of 75% by wt.

The thus obtained masterbatch was employed to color alkyd-, epoxy-, vinyl-, acrylic-, polyurethane-, polyester based paints with perfect color homogeneity. It was also employed to color with perfect homogenety plastic materials consisting essentially of polyethylene and polypropylene.

### Example 5

In the same apparatus of Example 1 and operating in the same way, 100 g of component a), having the following composition: PARALOID DM 55® 20%, mixture in equal parts of LAROPAL K 80® and LAROPAL A.81®, 80% are charged. 80 g of a lead chromate pigment are then added, while stirring to obtain an intimate dispersion. While stirring continuously, 20 g of component b) are added slowly having the following composition:

| | |
|---|---|
| - acetyltributylcitrate | 62 % |
| - PEG 400 ML | 30% |
| - TBCP | 4% |
| - Elfugine V | 3% |
| - TO additive | 1% |

The obtained powder is then extruded at 115°C and the extruded product is cut into pellets.

The coloring matter is thus present in the masterbatch in an amount of 40% by wt.

The thus obtained mastebatch was employed to color with perfect homogeneity paints based on nitrocellulose-, alkyd-, acrylic-, vinyl-, epoxy-, polyurethane and polyester resins; also polyethylene, ABS resins and natural rubber.

### Example 6

Employing the apparatus of Example 1 and operating in the same way, 50 g of component a) consisting of PARALOID DM 55® were charged, then 150 g of manganese CM lacquer pigment (Bayer), colored in red were added, and the mixture was stirred to obtain an intimate dispersion. Into the turbo-dispersing apparatus 15 g of component b) were then added slowly, having the same composition 85 in Example 1. The obtained powder was extruded at 140°C and the extruded product cut into pellets. In the pulverized masterbacth (final product) 67% by wt. of pigment was contained.

The thus obtained masterbatch was employed to color nitrocellulose-, alkyd-, epoxy-, vinyl-, acrylic-, polyurethane-, polyester- paints with a perfect color homogeneity. It was also employed to color in a perfectly homogeneous way plastic materials consisting essentially of polyamide-, polyethylene- and polypropylene resins.

## Claims

1. Multi-purpose masterbatches, consisting of a uniform mixture of the following components:
a) a resin selected from the group of:
a₁) acrylic resins having a softening point of between 75 and 115°C, possibly in admixture with versatic resins,
a₂) urea-aldehyde resins or cyclohexanone resins having a softening points of between 70 and 115°C
or a mixture of a₁ and a₂ in ratios comprised between 70:30 and 10:90
b) a second component selected from the group of
b₁) citric-, acetylcitric- or tartaric acid glycol- or polyalkylenglycol esters containing between 10 and 30 monomeric units
b₂) citric-, acetylcitric- or tartaric acid monoalcohol esters, in admixture with polyalkylenglycols containing between 10 and 30 monomeric units, and which may be esterified with fatty acids of 4 to 18 carbon atoms
c) dyes and/or pigments and/or additives.

2. Masterbatches according to claim 1, characterized in that component a) consists of a mixture of cyclohexanone resin and acrylic resin.

3. Masterbatches according to claim 1, characterized in that component a) consists of a mixture of acrylic and urea-aldehyde resins.

4. Masterbatches according to claim 1, characterized in that component a) consists of a mixture of cyclohexanone resin and urea/aldehyde resin.

5. Masterbatches according to claim 1, characterized in that component a) consists of a mixture of acrylic resin, cyclohexanone resin and urea/aldehyde resin.

6. Masterbatches according to claim 1, characterized in that component b) consists of a mixture of tributylcitrate and fatty acids polyalkylenglycol.

7. Masterbatches according to claim 1, characterized in that component b) consists of a mixture of acetyltributylcitrate and fatty acids polyalkylenglycol esters.

8. Masterbatches according to claim 1, characterized in that the weight ratio between component a) and b) is comprised between 95:5 and 80:20.

9. Masterbatches according to claim 1, characterized in that the percentage of dyes or pigments is comprised between 16 and 90%.

10. Use of the masterbatches according to claims 1 to 9 for uniformly coloring nitrocellulose-, alkyd-, acrylic-, vinyl-, epoxy-, polyurethane-, polyester or chlorinated rubber based paints.

11. Use of the masterbatches according to claims 1 to 9 for uniformly coloring vinyl-, polyethylene-, polypropylene-, ABS-, polyamide resins and rubber.

12. Process for the preparation of the masterbatches according to claim 1 to 9, comprising the following successive steps:
- intimate admixture of component a) with the dye or pigment in a suitable mixer
- gradual addition of component b), which may contain dispersed one or more additives, to the mixture of a) with the coloring matter
- further mixing of the mass, after addition of component b), to obtain a homogeneous powder
- extrusion of the mass at a temperature between 90° and 150°C.

13. Process according to claim 12, characterized in that the mixing apparatus is a turbo-dispersing one.

## Patentansprüche

1. Mehrzweckkonzentrate, bestehend aus einer einheitlichen Mischung der folgenden Komponenten:
(a) einem Harz, ausgewählt aus der Gruppe:
(a₁) Acrylharze mit einem Erweichungspunkt zwischen 75 und 115°C, gegebenenfalls in Beimischung mit Versatharzen
(a₂) Harnstoffaldehydharze oder Cyclohexanonharze mit einem Erweichungspunkt zwischen 70 und 115°C;
oder einer Mischung von (a₁) und (a₂) in einem Verhältnis zwischen 70:30 und 10:90;
(b) einer zweiten Komponente, ausgewählt aus der Gruppe:
(b₁) Zitronensäure-, Acetylzitronensäure- oder Weinsäureglykol- oder Polyalkylenglykolester, die zwischen 10 und 30 Monomereinheiten enthalten,
(b₂) Zitronensäure-, Acetylzitronensäure- oder Weinsäuremonoalkoholester in Beimischung mit Polyalkylenglykolen, die zwischen 10 und 30 Monomereinheiten enthalten und die mit Fettsäuren mit zwischen 4 und 18 Kohlenstoffatomen verestert sein können;
(c) Farbstoffen und/oder Pigmenten und/oder Zusatzstoffen.

2. Konzentrate gemäss Anspruch 1, dadurch **gekennzeichnet,** dass die Komponente (a) aus einer Mischung aus Cyclohexanonharz und Acrylharz besteht.

3. Konzentrate gemäss Anspruch 1, dadurch **gekennzeichnet,** dass die Komponente (a) aus einer Mischung aus Acryl- und Harnstoffaldehydharzen besteht.

4. Konzentrate gemäss Anspruch 1, dadurch **gekennzeichnet,** dass die Komponente (a) aus einer Mischung aus Cyclohexanonharz und Harnstoffaldehydharz besteht.

5. Konzentrate gemäss Anspruch 1, dadurch **gekennzeichnet,** dass die Komponente (a) aus einer Mischung aus Acrylharz, Cyclohexanonharz und Harnstoffaldehydharz besteht.

6. Konzentrate gemäss Anspruch 1, dadurch **gekennzeichnet,** dass die Komponente (b) aus einer Mischung aus Tributylcitrat und Fettsäurepolyalkylenglykol besteht.

7. Konzentrate gemäss Anspruch 1, dadurch **gekennzeichnet,** dass die Komponente (b) aus einer Mischung aus Acetyltributylcitrat und Fettsäure-polyalkylenglykolestern besteht.

8. Konzentrate gemäss Anspruch 1, dadurch **gekennzeichnet,** dass das Gewichtsverhältnis zwischen Komponente (a) und (b) zwischen 95:5 und 80:20 beträgt.

9. Konzentrate gemäss Anspruch 1, dadurch **gekennzeichnet,** dass der Prozentsatz an Farbstoffen oder Pigmenten zwischen 16 und 90 % beträgt.

10. Verwendung der Konzentrate gemäss Ansprüchen 1 bis 9 zur einheitlichen Färbung von Farben auf Nitrocellulose-, Alkyd-, Acryl-, Vinyl-, Epoxy-, Polyurethan-, Polyester- oder Chlorkautschukbasis.

11. Verwendung der Konzentrate gemäss Ansprüchen 1 bis 9 zur einheitlichen Färbung von Vinyl-, Polyethylen-, Polypropylen-, ABS-, Polyamidharzen und Kautschuk.

12. Verfahren zur Herstellung der Konzentrate gemäss Ansprüchen 1 bis 9, umfassend die nachstehenden aufeinanderfolgen Schritte:
- das innige Mischen der Komponente (a) mit dem Farbstoff oder Pigment in einem geeigneten Mischer,
- die allmähliche Zugabe der Komponente (b), die einen oder mehrere dispergierte Zusatzstoffe enthalten kann, zu der Mischung von (a) mit dem farbgebenden Stoff,
- das Weitermischen der Masse nach Zugabe der Komponente (b), um ein homogenes Pulver zu erhalten,
- Extrudieren der Masse bei einer Temperatur zwischen 90 und 150°C.

13. Verfahren gemäss Anspruch 12, dadurch **gekennzeichnet,** dass die Mischvorrichtung eine turbodispergierende ist.

## Revendications

1. Mélanges maîtres à usages multiples, consistant en un mélange uniforme des constituants suivants :
a) une résine choisie dans le groupe constitué par :
a1) les résines acryliques ayant un point de ramollissement entre 75 et 115°C, éventuellement en mélange avec des résines polyvalentes,
a2) les résines urée-aldéhyde ou les résines cyclohexanones ayant des points de ramollissement entre 70 et 115°C,
ou un mélange de a1 et a2 dans des proportions comprises entre 70/30 et 10/90 ;
b) un second constituant choisi dans le groupe constitué par :
b1) les esters de glycol- ou de polyalkylèneglycol et de l'acide citrique, acétylcitrique ou tartrique contenant entre 10 et 30 unités monomères ;
b2) les esters de monoalcool et de l'acide citrique, acétylcitrique ou tartrique, en mélange avec des polyalkylèneglycols contenant entre 10 et 30 unités monomères, et qui peuvent être estérifiés par des acides gras ayant de 4 à 18 atomes de carbone ;
c) des colorants et/ou des pigments et/ou des additifs.

2. Mélanges maîtres selon la revendication 1, caractérisés en ce que le constituant a) consiste en un mélange de résine cyclohexanone et de résine acrylique.

3. Mélanges maîtres selon la revendication 1, caractérisés en ce que le constituant a) consiste en un mélange de résines acryliques et urée-aldéhyde.

4. Mélanges maîtres selon la revendication 1, caractérisés en ce que le constituant a) consiste en un mélange de résine cyclohexanone et de résine urée-aldéhyde.

5. Mélanges maîtres selon la revendication 1, caractérisés en ce que le constituant a) consiste en un mélange de résine acrylique, de résine cyclohexanone et de résine urée-aldéhyde.

6. Mélanges maîtres selon la revendication 1, caractérisés en ce que le constituant b) consiste en un mélange de citrate de tributyle et de polyalkylèneglycol d'acides gras.

7. Mélanges maîtres selon la revendication 1, caractérisés en ce que le constituant b) consiste en un mélange de citrate d'acétyltributyle et d'esters de polyalkylèneglycol et d'acides gras.

8. Mélanges maîtres selon la revendication 1, caractérisés en ce que la proportion pondérale du constituant a) et du constituant b) est comprise entre 95/5 et 80/20.

9. Mélanges maîtres selon la revendication 1, caractérisés en ce que le pourcentage de colorants ou de pigments est compris entre 16 et 90%.

10. Utilisation de mélanges maîtres selon l'une des revendications 1 à 9, pour colorer uniformément des peintures nitrocellulose, de peintures alkydes, acryliques, vinyliques, époxy, polyuréthane, polyester ou à base de caoutchouc chloré.

11. Utilisation de mélanges maîtres selon l'une des revendications 1 à 9, pour colorer uniformément des résines vinyliques, polyéthylène, polypropylène, ABS, polyamide et des caoutchoucs.

12. Procédé pour la préparation de mélanges maîtres selon l'une des revendications 1 à 9, comprenant les étapes successives suivantes :
- mélange intime du constituant a) avec le colorant ou le pigment dans un mélangeur approprié ;
- addition progressive au constituant a) contenant la matière colorante, du constituant b) qui peut contenir un ou plusieurs additifs dispersés ;
- mélange supplémentaire de la masse, après addition du constituant b), pour obtenir une poudre homogène ;
- extrusion de la masse à une température entre 90° et 150°C.

13. Procédé selon la revendication 12, caractérisé en ce que l'appareil pour le mélange est du type à turbo-dispersion.
